## Europäisches Patentamt
## European Patent Office
## Office européen des brevets

(19)

(11) Veröffentlichungsnummer: **0 218 002**
**B1**

(12)

# EUROPÄISCHE PATENTSCHRIFT

(45) Veröffentlichungstag der Patentschrift:
25.10.89

(51) Int. Cl.⁴: **B 65 G 47/71**

(21) Anmeldenummer: 86104145.7

(22) Anmeldetag: 25.03.86

(54) **Verteilvorrichtung für Flaschen.**

(30) Priorität: 04.04.85 DE 3512460

(43) Veröffentlichungstag der Anmeldung:
15.04.87 Patentblatt 87/16

(45) Bekanntmachung des Hinweises auf die Patenterteilung:
25.10.89 Patentblatt 89/43

(84) Benannte Vertragsstaaten:
AT BE CH DE FR GB LI NL

(56) Entgegenhaltungen:
WO-A-82/01697
DE-A-3 007 104
FR-A-2 248 216
FR-A-2 259 770
NL-A-7 501 573
US-A-4 069 908

(73) Patentinhaber: **H&K Verpackungstechnik GmbH,
Eichendorffstrasse 9, D-4600 Dortmund 1 (DE)**

(72) Erfinder: **Bargel, Günter, Sommerbergweg 4,
D-4600 Dortmund 30 (DE)**

## Beschreibung

Die Erfindung bezieht sich auf eine Verteilvorrichtung für Flaschen, Dosen und dgl., die von einer Vorbehandlungsmaschine einreihig einem Mehrspurförderer zugeleitet und dessen Einzelförderbahnen mittels einer Zuteilvorrichtung nacheinander zugegeben werden und diese eine der Anzahl der Einzelförderbahnen entsprechende Anzahl von mit den Einzelbahnen in Wirkungsverbindung bringbaren Ausschleuselementen aufweist, wobei nach Ausschleusen einer Fehlflasche in die Aussortierstrecke die für diese Flasche normalerweise vorgesehene Einzelbahn mit der ihr fehlenden nächstfolgenden Flasche beschickbar ist, so daß bei Minderbefüllung einer betreffenden Einzelförderbahn zunächst deren Vollständigkeit und anschließend die normale weitere Befüllung aller miteinander korrespondierender Einzelförderbahnen bewirkt wird (siehe WO/A/82-01697).

Aus der DE-OS-3 007 104 ist eine Transportvorrichtung für aufrechtstehende Gefäße mit einem synchron zum Zuförderer umlaufenden Schubförderer bekannt, wobei die Gefäße aus Taschen des Zuförderers in Taschen des Abförderers überführt werden. Die Aufteilung erfolgt dabei von einer einreihigen Spur auf einen Mehrspurförderer mittels unmittelbar mit den Taschen des Zuförderers kämmenden Sternrädern, die die aufgenommenen Flaschen an die entsprechend zugeordneten Einzelförderbahnen abgeben. Bei dieser Förderung ist die vollständige Befüllung des Taschenförderers unabdingbare Voraussetzung, um eine entsprechend gleichmäßige Beschickung der Einzelförderbahnen sicherzustellen. In der Getränkeindustrie werden jedoch insbesondere vor der Abgabe der einspurig zulaufenden Flaschen an einen Mehrspurförderer Flaschenkontrollen durchgeführt, wobei es häufig vorkommt, daß beispielsweise nicht exakt befüllte oder fehlerhafte Flaschen ausgeschieden werden müssen. In einem solchen Falle ist eine geschlossene Reihe nicht mehr gegeben und insofern auch eine exakte und gleichmäßige Aufteilung der Flaschen auf die Einzelförderbahnen eines Mehrspurförderers nicht möglich.

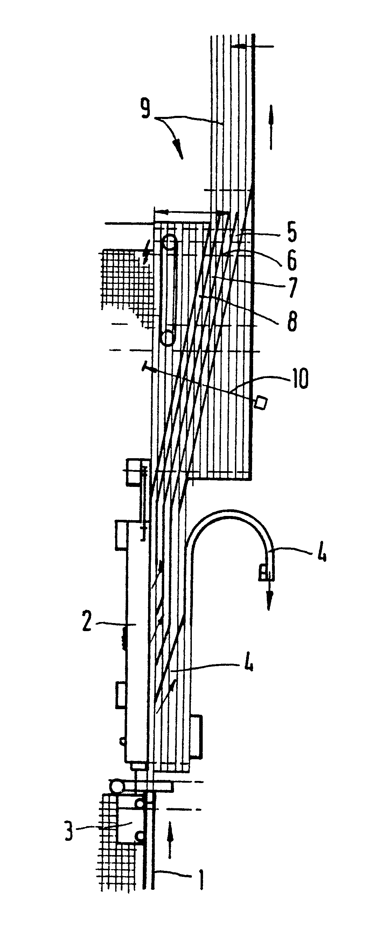

Ferner ist aus der Druckschrift WO/A/82-01697 eine Flaschenaufteilvorrichtung bekannt geworden, wobei alle Gut-Flaschen angesaugt und aus ihrer geradlinigen Zuführungsbahn herausgezogen werden, also nahezu quer zu ihrer Bewegungsrichtung entlang dem Sternradius abtransportiert und dann plötzlich wieder von den Saugelementen des Sternes gelöst und von den betreffenden Bändern beschleunigt und abtransportiert werden. Insbesondere aus den Fig. 5 - 7 ist ersichtlich, daß dabei die Flaschen einer erheblichen Verzögerung durch die kurvenförmige Querfahrt und anschließend wieder einer entsprechenden Beschleunigung unterworfen werden. Insbesondere die außenliegenden Bahnen D2, D1, aber auch die Bahn D3 erfordert es, daß die Flaschen praktisch aus ihrer Standposition heraus der vollen Beschleunigung unterworfen werden. Diese Maßnahme ist insbesondere bei Getränkeabfüllanlagen mit hoher Leistung, in welcher praktisch in einer Stunde bis zu 80 000 Flaschen verarbeitet werden, nicht vorstellbar. Bei solchen Geschwindigkeiten würden die Flaschen insbesondere im Bereich der Übergabestellen von dem Saugstern zu den Bandförderern umstürzen und zu erheblichen Schwierigkeiten führen. Demzufolge ist eine solche Anlage nur bei äußerst geringen Leistungen einsetzbar, also für die gewünschten Hochleistungen nicht einsetzbar.

Die Erfindung hat sich nun die Aufgabe gestellt, eine Vorrichtung zu schaffen, mit welcher die vorgenannten Nachteile vermieden werden und trotz der Ausscheidung von Flaschen aus einer einreihigen Spur vor der Übergabevorrichtung eine gleichmäßige Beschickung der Einzelförderbahnen eines Mehrspurförderers sichergestellt ist, so daß für die nachfolgende Behandlungsmaschine, beispielsweise einer Packmaschine, eine für den Umsetzvorgang erforderliche und ausreichende Anzahl von Flaschen auf den Einzelförderbahnen ständig bevorratet wird.

Diese Aufgabe wird durch die Merkmale des kennzeichnenden Teils des Patentanspruchs 1 gelöst.

Schließlich wird vorgeschlagen, daß jede Einzelförderbahn einen deren Befüllungsgrad an eine Steuervorrichtung vermittelnden Impulsgeber aufweist.

Mit der vorgeschlagenen Ausbildung ist es unabhängig von dem Geschehen auf der vorausgehenden Einzelspur möglich, die als Mehrspurförderer zusammengefaßten Einzelförderbahnen völlig gleichmäßig zu beschicken, so daß immer ein ausreichender Vorrat zum Umsetzen von Flaschengruppen usw. gegeben ist. Dieser Vorrat kann zwar auch mit relativ langen Bevorratungsstrecken unter Berücksichtigung deren Pufferwirkung bewerkstelligt werden, hat aber den außerordentlichen Nachteil, daß entsprechend lange Wege zur Verfügung stehen müssen und auch ein entsprechend großer Platzbedarf in einer solchen Anlage erforderlich ist. Mit der erfindungsgemäß vorgeschlagenen Ausgestaltung können äußerst kurze Wege angestrebt werden, weil die Zuteilvorrichtung ungeachtet des Ausstoßes vorhergehender Flaschen ein- oder mehrmals für eine bestimmte Einzelförderbahn betätigbar ist und auf diese Weise jede nebeneinander befindliche Einzelförderbahn mit exakt gleicher Flaschenmenge beschickt. Hierdurch entfällt die sonst übliche und erforderliche Speicherung von bestimmten Pufferkapazitäten.

Im nachfolgenden wird die Erfindung anhand eines in der Zeichnung dargestellten Ausführungsbeispiels näher erläutert.

In der Zeichnung ist mit 1 eine einspurige Zuführstrecke bezeichnet, auf welcher die von einer Vorbehandlungsmaschine, beispielsweise einer nicht weiter dargestellten Füllmaschine, herantransportierten Flaschen in einer geschlossenen Reihe in Richtung der nachfolgenden Verteilvorrichtung 2 transportiert werden. Unmittelbar vor der Verteilvorrichtung ist eine Prüf- und Erkennungsvorrichtung 3 angeordnet, deren Aufgabe es ist, fehlerhafte Flaschen zu erkennen und anschließend auszusortieren. Hierzu befindet sich im Bereich der Verteilvorrichtung 2 eine Aussortierstrecke 4, auf welche fehlerhafte Flaschen mittels an Ketten umlaufenden Ausstoßelementen der Verteilvorrichtung 2 abgedrängt werden. Im Anschluß daran befindet sich ein Mehrspurförderer mit im Ausführungsbeispiel dargestellten vier Einzelförderbahnen 5 - 8.

Dabei ist die Aufteilvorrichtung 2 in bekannter Weise so ausgebildet, daß sie in Höhe des Beginns jeder Einzelförderbahn 5 - 8 anhand von Kurvenbahnen oder dgl. die Ausstoßelemente ausfährt und auf diese Weise die mit diesen korrespondierenden Flaschen in die entsprechenden Einzelförderbahnen abdrängt. Normalerweise wird dieser Abdrängvorgang für jede Einzelförderbahn nacheinander erfolgen, so daß eine praktisch gleichmäßige Beschickung aller Förderbahnen sichergestellt ist. Aufgrund der im Bereich der Erkennungsvorrichtung 3 ermittelten fehlerhaften Flaschen und deren nachfolgende Aussortierung auf die Aussortierstrecke 4 ist jedoch nicht ständig eine geschlossene Reihe von Flaschen im Bereich der Verteilvorrichtung vorhanden, so daß bei automatisch nacheinander folgender Wirkungsweise der einzelnen Ausstoßelemente häufig Einzelförderbahnen mehrmals bzw. überhaupt nicht beschickt werden. Bei den hohen Leistungsbereichen einer solchen Anlage stehen demzufolge in kurzer Zeit völlig unterschiedliche Befüllungsgrade der Einzelförderbahnen des Mehrspurförderers zur Verfügung. Dieses führt automatisch dann zu Schwierigkeiten, wenn nur eine relativ kurze Vorratsstrecke 9, beispielsweise vor einer Einpackmaschine, zur Verfügung steht. Um hier nun auch bei kurzen Bevorratungsstrecken eine einwandfreie Vorratshaltung auf dem Mehrspurförderer sicherzustellen, sind die einzelnen Ausschleuselemente unabhängig von der durch die Anzahl der Einzelförderbahnen vorgegebenen Reihenfolge in Abhängigkeit von deren Befüllungsgrad ein- und/oder mehrmals hintereinander in Zuteiltätigkeit setzbar. Jedoch wird bei Minderbefüllung einer betreffenden Spur zunächst deren Vollständigkeit und erst anschließend die normale weitere Befüllung aller miteinander korrespondierender Einzelförderbahnen bewirkt, so daß ständig in dem kurzen Bereich 9 des Mehrspurförderers eine ausreichend geschlossene Anzahl von nebeneinander befindlichen Flaschen vorhanden ist. Hierzu kann jede Einzelförderbahn einen deren Befüllungsgrad ermittelnden Impulsgeber 10 aufweisen, der mit einer die Ausschleuselemente in Tätigkeit setzende Steuervorrichtung gekoppelt ist.

Diese Steuervorrichtung ist zweckmäßig in dem Steuerbereich der Erkennungsvorrichtung 3 untergebracht und kann von dort aus unmittelbar auf die Ausschleuselemente im Bereich der Aussortierstrecke 4 einwirken.

**Patentansprüche**

1. Verteilvorrichtung für Flaschen, Dosen und dgl., die von einer Vorbehandlungsmaschine einreihig einem Mehrspurförderer zugeleitet und dessen Einzelförderbahnen mittels einer Zuteilvorrichtung nacheinander zugegeben werden und diese eine der Anzahl der Einzelförderbahnen entsprechende Anzahl von mit den Einzelbahnen (5 - 8) in Wirkungsverbindung bringbaren Ausschleuselementen aufweist, wobei nach Ausschleusen einer Fehlflasche in die Aussortierstrecke (4) die für diese Flasche normalerweise vorgesehene Einzelbahn (5 - 8) mit der ihr fehlenden nächstfolgenden Flasche beschickbar ist, so daß bei Minderbefüllung einer betreffenden Einzelförderbahn (5 - 8) zunächst deren Vollständigkeit und anschließend die normale weitere Befüllung aller miteinander korrespondierender Einzelförderbahnen (5 - 8) bewirkt wird, dadurch gekennzeichnet, daß eine Erkennungsvorrichtung (3) unmittelbar vor einer Reihe von Ausschleuselementen einer Zuteilvorrichtung (2) angeordnet und dem in Förderrichtung ersten Ausschleuselement eine Aussortierstrecke (4) zugeordnet ist und hinter dieser die eigentlichen Einzelbahnen (5 - 8) mit jeweils einzeln ansteuerbaren Ausschleuselementen angeordnet sind.

2. Verteilvorrichtung nach Anspruch 1, dadurch gekennzeichnet, daß jede Einzelförderbahn (5 - 8) einen deren Befüllungsgrad an eine Steuervorrichtung vermittelnden Impulsgeber (10) aufweist.

**Claims**

1. Distribution device for bottles, cans and the like, which are conducted in a single row from a preliminary treatment machine to a multi-track conveyor and are fed in succession to the individual conveyor belts of said conveyor by means of a distributor, and the latter includes a number of discharge members, which can be brought into operative connection with the individual belts (5 - 8), such number corresponding to the number of individual conveyor belts, wherein, after the discharge of a faulty bottle into the separation path (4), the individual belt (5 - 8), which is normally envisaged for such bottle, is loadable with the next succeeding bottle which it lacks, with the result that, if a pertinent individual conveyor belt (5 - 8) is not filled to capacity, such belt is first filled completely and then all of the individual conveyor belts (5 - 8), which correspond to one another, continue to be filled normally, characterised in that a detector device (3) is disposed immediately upstream of a row of discharge members of a distributor (2), and the first discharge member, when viewed with respect to the direction of conveyance, has a separation path (4) associated therewith, and the actual individual belts (5 - 8) are each provided with individually actuatable discharge members and are disposed downstream of said path.

2. Distribution device according to claim 1, characterised in that each individual conveyor belt (5 - 8) includes a pulse generator (10) which communicates to a control device the extent to which said belt is filled.

## Revendications

1. Dispositif de distribution pour bouteilles, boîtes et analogues qui sont amenés sur une seule rangée, par une machine de préconditionnement, à un convoyeur à pistes multiples et dont les différents chemins de transport individuels sont attribués successivement au moyen d'un dispositif répartiteur, celui-ci présentant un nombre d'éléments de séparation pouvant être amenés en liaison de travail avec les différents chemins de transport (5 - 8), correspondant au nombre des chemins de transport individuels, dans lequel après séparation d'une bouteille défectueuse dans la zone de tri (4), le chemin individuel (5 - 8), normalement prévu pour cette bouteille rejetée est alimenté la bouteille qui suit la bouteille manquante, de telle façon qu'en cas de moindre occupation d'un chemin de transport individuel particulier (5 - 8), celui-ci est d'abord complété et les autres chemins de transport individuels (5 - 8), correspondant l'un avec l'autre sont ensuite normalement remplis, caractérisé en ce qu'un dispositif de reconnaissance (3) est disposé directement devant une série d'éléments de séparation d'un dispositif séparateur (2), et une zone de tri (4) est combiné avec l'élément de séparation dans le sens de l'avancement, et derrière celle-ci les différents chemins de transport (5 - 8) proprement dits sont disposés avec chaque fois des éléments de séparation actionnables séparément.

2. Dispositif de distribution sels la revendication 1, caractérisé en ce que chaque de chemin de transport individuel (5 - 8 présente un générateur d'impulsions (10) communiquant son degré de remplissage à un dispositif de commande.

EP 0 218 002 B1